# EUROPEAN PATENT APPLICATION

(11) **EP 4 316 698 A1**
(43) Date of publication of application: **07.02.2024**
(21) Application number: 22779783.4
(22) Date of filing: 03.03.2022
(51) Int. Cl.: B22F 9/24, B22F 1/00, B22F 1/102

(54) **COPPER PARTICLES AND METHOD FOR PRODUCING SAME**

(30) Priority: 29.03.2021 JP 2021054554
(71) Applicant: Mitsubishi Materials Corporation, Tokyo 100-8117 (JP)
(72) Inventor: YAMAGUCHI, Tomohiko, Naka-shi, Ibaraki 311-0102 (JP); NAKAYA, Kiyotaka, Naka-shi, Ibaraki 311-0102 (JP); HIGAMI, Akihiro, Naka-shi, Ibaraki 311-0102 (JP)
(74) Representative: Gille Hrabal Partnerschaftsgesellschaft mbB Patentanwälte
(86) International application number: PCT/JP2022/009029
(87) International publication number: WO 2022/209558

(57) **Abstract**

There are provided copper particles, in which a surface of a core particle consisting of metallic copper is coated with an organic protective film formed from an organic molecule derived from copper carboxylate, a total concentration of metal impurities having an oxidation reduction potential lower than that of copper is less than 10 ppm by mass, and an average particle diameter of the copper particles in a state where the copper particles are primary particles is more than 50 nm and 200 nm or less. In a case where the copper particles are analyzed using a time-of-flight secondary ion mass spectrometry (TOF-SIMS), an amount of detected CuC₂O₂H⁻ ions is in a range of 0.02 times or more with respect to an amount of detected Cu⁺ ions, and an amount of detected C₂H₃O₂⁻ ions is in a range of 0.02 times or more with respect to the amount of the detected Cu⁺ ions.

## Description

### TECHNICAL FIELD

The present invention relates to copper particles, which are used as a raw material of a paste for electrical conduction or bonding, and a method for producing the same. It is noted that priority is claimed on Japanese Patent Application No. 2021-054554, filed March 29, 2021, the content of which is incorporated herein by reference.

### BACKGROUND ART

A method of printing on a substrate, a conductive paste or conductive ink which contains copper particles of a bonding material as a conductive filler, is widely known as a method of forming electrodes of electronic components and the like or wiring lines of electronic circuits. For example, the copper particles are prepared in a slurry shape and then mixed with an organic substance to be used as a bonding material of a conductive paste, a conductive ink, or the like. In recent years, a method of easily forming a wiring line or the like on a substrate or the like by directly applying such a conductive ink, conductive paste, or the like onto the substrate by using, for example, an inkjet printer, a screen printing machine, an offset printing machine, or the like, has been developed and put into practical use.

On the other hand, in recent years, there has been a demand for further miniaturizing an electronic circuit that is formed using conductive ink or the like or further reducing the size of an electronic device and increasing the density of electronic devices. As a result, a finer wiring pattern is required to form an electronic circuit. Therefore, it has become desired that even copper particles, which are a general conductive metal material of a conductive slurry which is a raw material of conductive ink or the like, are nano-sized or submicron-sized to have extremely small particle diameters.

A representative method for producing nano-sized or submicron-sized particles is a liquid phase reduction method. In this method, a raw material is dissolved in a solvent to prepare a solution so that metal ions are contained in the solution, and the metal particles are precipitated in the coexistence of a dispersing agent for suppressing the aggregation of the particles, whereby the metal ions are reduced. As a technique in the related art related to a method for producing copper particles according to the liquid phase reduction method in which copper ions are reduced in a liquid by using a reducing agent, for example, a method using a hydrazine compound or sodium boron hydroxide as a reducing agent is known (for example, see Patent Document 1 (Claims 1 and 3 to 5, and paragraph [0019]), see Patent Document 2 (Claims 2 and Examples 1 to 5), and see Patent Document 3 (Claim 2, paragraph [0024], and paragraph [0025])).

Patent Document 1 discloses a method for producing copper particles in which a reducing agent is allowed to act on an aqueous solution containing a copper complex in which a ligand having a plurality of -(C=O)O- moieties are coordinated to copper, under a condition in which an agent for suppressing aggregation between particles and/or oxidation of particles is not present. In this method, a hydrazine compound, sodium borohydride, or the like is added in a pH range of 8 to 14 through a copper-nitrilotriacetic acid complex, thereby producing copper particles in which an average particle diameter of primary particles is 0.01 µm or more and 0.3 µm or less.

In addition, Patent Document 2 discloses a method in which before adding a hydrazine-based reducing agent, the pH of an aqueous solution of a copper salt is adjusted to 12 or higher by using sodium hydroxide, and then a reducing sugar is added, and the hydrazine-based reducing agent is subsequently added to produce copper particles having a particle diameter of 0.5 µm to 3.1 µm.

Further, Patent Document 3 discloses a method in which an aqueous solution of sodium hydroxide is added to an aqueous solution of copper sulfate to generate cupric oxide, and then a reducing agent such as glucose is added, and a hydrazine-based reducing agent is subsequently added to produce copper particles having an average particle diameter of 0.1 to 10 µm.

In addition, fine particles of a metal such as gold, silver, copper, platinum, or palladium, the surface of which is coated with a protective agent, are disclosed, where the fine metal particles is characterized in that the protective agent is selected from at least one kind of an amine compound and a carboxylic acid compound, and a total content of an alkali metal, halogen, sulfur, and phosphorus contained in the fine metal particles is less than 0.1% by mass with respect to a mass of the fine metal particles (see Patent Document 4 (Claims 1, 4, and 8, paragraph [0055], paragraph [0098], and paragraph [0099]). Here, 0.1% by mass is 1,000 ppm by mass.

In the method for producing the fine metal particles disclosed in Patent Document 4, a metal nucleus is reduced and precipitated from a metal compound that is dispersed in a solid state in a liquid phase containing a reducing agent and a protective agent, this metal nucleus is aggregated and concurrently coated with the protective agent to generate fine metal particles, and then impurities of alkali metals, halogens, sulfur, and phosphorus contained in the fine metal particles are removed to purify the fine metal particles. In addition, the metal compound as a raw material is said to be preferably a metal compound that does not contain impurities of alkali metals such as a metal oxide and a noble metal oxide, halogens, sulfur, and phosphorus.

In Example 5 shown in Patent Document 4, bis(acetylacetonato) copper is used as a raw material, bis(2-ethylhexyl)amine is used as a protective agent and a reducing agent, and dodecyl amine is used as a protective agent. A solution obtained by mixing these is heated to 220°C to reduce Cu(C₅H₇O₂)₂ to obtain a dispersion liquid of fine Cu metal particles coated with dodecyl amine and bis(2-ethylhexyl) amine. Then, this dispersion liquid is purified to obtain fine Cu metal particles.

Patent Document 4 describes that as a result of measuring the impurity elements contained in the fine Cu metal particles obtained in Example 5 and the contents of the impurity elements by ion chromatography or ICP fluorescence spectroscopy, 0.005% by mass (50 ppm by mass) of the Cl component is contained, and halogens, alkali metals, sulfur, and phosphorus except for Cl were not detected.

Further, a particle for a bonding material, having an organic protective film formed on the surfaces of copper nanoparticles, and a method for producing the same are disclosed (see Patent Document 5 (Claims 1 and 4, paragraph [0012], and paragraph [0015]). This particle for a bonding material has a BET specific surface area in a range of 3.5 m²/g or more and 8 m²/g or less, where the BET diameter converted from the specific surface area is in a range of 80 nm or more and 200 nm or less, and the organic protective film is contained in a range of 0.5% by mass or more and 2.0% by mass or less with respect to 100% by mass of the particles for a bonding material.

In addition, in the method for producing this particle for a bonding material, a pH adjusting agent is added to an aqueous dispersion liquid of copper citrate at room temperature to adjust the pH to a pH of 3 or more and a pH of less than 7, a hydrazine compound is added to this pH-adjusted aqueous dispersion liquid of copper citrate in an inert gas atmosphere and mixed, this mixed liquid is heated to a temperature of 60°C or higher and 80°C or lower, followed by being held for 1.5 hours or more and 2.5 hours or less in an inert gas atmosphere, whereby the copper citrate is reduced to generate copper nanoparticles, and then an organic protective film is formed on the surface of these copper nanoparticles.

### CITATION LIST

### [Patent Documents]

[Patent Document 1]
   Japanese Unexamined Patent Application, First Publication No. 2017-115119
[Patent Document 2]
   Japanese Patent No. 2638271
[Patent Document 3]
   Japanese Patent No. 3934869
[Patent Document 4]
   Japanese Unexamined Patent Application, First Publication No. 2013-072091
[Patent Document 5]
   Japanese Unexamined Patent Application, First Publication No. 2020-059914

### SUMMARY OF INVENTION

### Technical Problem

The nano-sized or submicron-sized copper particles obtained by the liquid phase reduction method disclosed in Patent Documents 1 to 3 metal impurities having a concentration on the order of several tens of ppm by mass, which is a concentration of 10 ppm by mass or more, may be contained due to the difference between the oxidation reduction potential of copper ions and the oxidation reduction potential of a reducing agent such as a hydrazine compound or sodium borohydride, where the difference is a driving force for the oxidation and reduction.

In a case where the copper sulfate for industrial use, described in Patent Document 3, is used as a raw material for copper, metal elements such as nickel, iron, lead, and silver are likely to be contained as metal impurities. Since the oxidation reduction potentials of these metal elements are higher than the oxidation reduction potentials of the hydrazine compound and sodium boron hydroxide, these metal elements may be precipitated at the time of the reduction from copper ions to copper and become metal impurities in copper particles having a concentration of 10 ppm by mass or more. In addition, in a case of reduction in an alkaline range as in Patent Documents 1 and 2, there is a problem that metal impurities are likely to be precipitated, and in a case of using sodium borohydride as a reducing agent as in Patent Document 1 or using sodium hydroxide as a pH adjusting agent as in Patent Document 2, there is a problem that sodium is likely to be precipitated, and as a result, copper particles containing metal impurities at a concentration of 10 ppm by mass or more are made.

As an evaluation of the copper particles of Example 5 shown in Patent Document 4, it is described that an alkali metal is not detected as an element contained in the copper particles. However, Patent Document 4 makes no description regarding metal impurities other than the alkali metal, and it is highly probable that these copper particles contain a metal other than the alkali metal for the following reason. That is, the aliphatic amine compound, which is used as a reducing agent in the method disclosed in Patent Document 4, and bis(2-ethylhexyl)amine in Example 5 have high reducibility since they exhibit adsorption coordinated to fine metal particles and have an electron-donating alkyl group, which increases the electron density of the unshared electron pair on the nitrogen atom. Therefore, there is a problem that from the viewpoint of the oxidation reduction potential of those other than the alkali metal, a metal element that can be a metal impurity, for example, a metal element such as iron or nickel is precipitated as an impurity in the metal compound.

In addition, in the method for producing fine metal particles containing copper particles disclosed in Patent Document 4, it is said to be preferable to use a metal compound containing no impurities, as a raw material. Therefore, restrictions such as the selection of a metal compound containing no impurities, for example, a metal oxide or a noble metal oxide as a raw material, are likely to occur. In addition, this copper particle method has a problem in that a metal nucleus consisting of a metal compound cannot be reduced and precipitated unless being at a high temperature of 230°C, and furthermore, a purification step for removing impurities contained in the fine metal particles is required.

Further, in the particles for a bonding material disclosed in Patent Document 5, a lower limit value of the BET diameter is set to 80 nm, and thus it may be difficult to form a fine wiring pattern having a narrow pitch in a case of forming a wiring pattern from a paste which has been made using these particles. In addition, in the method for producing particles for a bonding material disclosed in Patent Document 5, that is, in the method for producing copper particles, there is a problem that the impurity concentration does not become less than 10 ppm by mass in a case where the pH of a mixed liquid is in a pH range of 6 to 7 which is close to neutral and in a case where the heating temperature of the mixed liquid exceeds 75°C.

Although a copper wire or the like has excellent conductivity or excellent heat transfer properties in a case where copper particles containing metal impurities having a concentration of 10 ppm by mass or more are used in a wiring line material, there is a concern that the deterioration of characteristics of other members due to the diffusion of metal impurities to the other members, due to metal impurities having a concentration of 10 ppm by mass or more. For example, in a case where a conductive paste containing copper particles is applied onto a ceramic base material such as base material typified by a multilayer ceramic capacitor (MLCC), there is a risk that metal impurities diffuse to a ceramic base material and impair the insulating properties of the base material.

An object of the present invention is to provide copper particles which have excellent conductivity or excellent heat transfer properties of a copper wire or the like in a case of being used as a wiring line material or a bonding material, make it possible to realize a fine wiring pattern in a case of forming an electronic circuit, and do not impair the characteristics of other members due to the diffusion of metal impurities and a method for producing the copper particles.

### Solution to Problem

The inventors of the present invention found that in a case where copper carboxylate is used as a supply source of copper, a hydrazine compound is used as a reducing agent, and the copper carboxylate is reduced with a hydrazine compound having a predetermined oxidation reduction potential at a predetermined temperature for a predetermined time in an acidic range where sodium hydroxide is not required to be used, it is possible to obtain copper particles having an average particle diameter of primary particles in a range of more than 50 nm and 200 nm or less, in which a particle surface is coated with an organic protective film formed from an organic molecule derived from copper carboxylate and metal impurities having an oxidation reduction potential lower than that of copper is reduced to a concentration of less than 10 ppm by mass, without using a dispersing agent and a surface protective agent for suppressing aggregation between particles and/or oxidation of particles, thereby reaching the present invention.

A first aspect according to the present invention is copper particles in which surfaces of core particles consisting of metallic copper are coated with an organic protective film formed from an organic molecule derived from copper carboxylate, in the copper particles, a total concentration of metal impurities having an oxidation reduction potential lower than that of copper is less than 10 ppm by mass, an average particle diameter of the copper particles in a state where the copper particles are primary particles is in a range of more than 50 nm and 200 nm or less, and in a case where the copper particles are analyzed using a time-of-flight secondary ion mass spectrometry (TOF-SIMS), an amount of detected CuC₂O₂H⁻ ions is in a range of 0.02 times or more with respect to an amount of detected Cu⁺ ions, and an amount of detected C₂H₃O₂⁻ ions is in a range of 0.02 times or more with respect to the amount of the detected Cu⁺ ions.

A second aspect according to the present invention is a method for producing copper particles, which is a method for producing the copper particles according to the first aspect without using a dispersing agent and a surface protective agent for suppressing aggregation between particles and/or oxidation of particles, the method for producing copper particles, which includes;
a step of adding a pH adjusting agent to an aqueous dispersion liquid of copper carboxylate to adjust the pH of the aqueous dispersion liquid to be in an acidic range of 3 or more and less than 6,
a step of adding an aqueous solution of a hydrazine compound having an oxidation reduction potential in a range of -0.7 V to -0.5 V to the pH-adjusted aqueous dispersion liquid of copper carboxylate and carrying out mixing to obtain a mixed liquid, and
a step of heating the mixed liquid to a temperature of 60°C to 75°C, followed by being held for 1.5 hours to 2.5 hours in an inert gas atmosphere, to reduce the copper carboxylate to obtain a copper particle dispersion liquid in which the copper particles are dispersed.

A third aspect according to the present invention is an invention based on the second aspect, where it is the method for producing copper particles, in which the copper carboxylate is poorly soluble in water and is one or two or more kinds of copper salts selected from the group consisting of copper carboxylates having 4 to 8 carbon atoms.

A fourth aspect according to the present invention is an invention based on the second aspect, where it is the method for producing copper particles, in which the pH adjusting agent is ammonium carboxylate.

### ADVANTAGEOUS EFFECTS OF INVENTION

In the copper particles according to the first aspect according to the present invention, the core particle surface is coated with an organic protective film formed from an organic molecule derived from copper carboxylate, and thus the copper particles have excellent oxidation resistance during storage. Particularly, in the copper particles disclosed in Patent Document 4, the particle surface is coated with a protective agent, by using an additive such as an amine compound or a carboxylic acid compound, and thus the risk of contamination with metal impurities is high, whereas the copper particles according to the first aspect according to the present invention have characteristics that the particle surface is coated with an organic protective film derived from copper carboxylate and thus the risk of contamination with metal impurities is low. In addition, since the total concentration of metal impurities having an oxidation reduction potential lower than that of copper is less than 10 ppm by mass, the characteristics of other members are not impaired due to the diffusion of metal impurities in a case where copper particles are used as a wiring line material or a bonding material. In addition, the average particle diameter of primary particles is in a range of more than 50 nm and 200 nm or less, and thus the copper particles have excellent conductivity or excellent heat transfer properties of a copper wire or the like in a case of being used as a wiring line material or a bonding material and make it possible to realize a fine wiring pattern in a case of forming an electronic circuit. In addition, the reaction area of the copper particles is large, and the reactivity by heating is high, which makes it possible to sinter the copper particles at a relatively low temperature.

In addition, in the copper particles according to the first aspect according to the present invention, in a case where the copper particles are analyzed using a time-of-flight secondary ion mass spectrometry (TOF-SIMS), an amount of detected CuC₂O₂H⁻ ions is in a range of 0.02 times or more with respect to an amount of detected Cu⁺ ions, and an amount of detected C₂H₃O₂⁻ ions is in a range of 0.02 times or more with respect to the amount of the detected Cu⁺ ions, and thus the amount of the organic protective film is not insufficient in protecting the copper particles. Due to this organic protective film, the surfaces of the copper particles are not oxidized, and it is possible to prevent the copper particles from aggregating with each other.

In the method for producing copper particles according to the second aspect according to the present invention, a metal compound called copper carboxylate is used as a supply source of copper ions which are not from a water-soluble complex in a liquid as the supply source of copper ions, whereby the copper ions slightly eluted from the copper carboxylate is subjected to a consecutive reaction with the hydrazine compound which is a reducing agent, which makes it possible to reduce the concentration of copper ions in the liquid even in an acidic range, and makes it possible to obtain copper particles having an average particle diameter of primary particles in a range of more than 50 nm and 200 nm or less.

In addition, since the organic molecule which is a non-metal portion constituting the copper carboxylate coats the core particle surface of the copper particles as a surface protective film, it is not required to use a dispersing agent for preventing the aggregation of the copper particles and a surface protective agent, such as those described in Patent Document 4, and the contamination with impurities due to a surface protective agent does not occur, which makes it possible to still further reduce the concentration of the impurities in the copper particles. Further, since the above-described organic molecule is present on the surface of the copper particles, the dissolution of the core particles is suppressed, copper ion is difficult to become copper (II) hydroxide, and thus difficult to precipitate as copper (II) hydroxide, which makes it possible to produce particles of interest in a high yield. Furthermore, the obtained copper particles have excellent oxidation resistance during storage.

Furthermore, in a case where the pH of the aqueous dispersion liquid of copper carboxylate is adjusted to an acidic range of a pH of 3 or more and less than 6 and copper carboxylate is reduced with a hydrazine compound having an oxidation reduction potential of -0.7 V to -0.5 V at a temperature of 60°C to 75°C for a predetermined time, the pH value does not reaches a value close to a neutral pH of 6 to 7 as described in Patent Document 5, and thus a difference between the oxidation reduction potential of copper ions and the oxidation reduction potential of the hydrazine compound becomes slight, whereby the precipitation of a metal less noble than copper is suppressed, and the total concentration of metal impurities less noble than copper becomes less than 10 ppm by mass. Further, as described in Patent Document 5, since the mixture is not heated at a temperature of 80°C, the elution of the copper ion from the copper carboxylate is suppressed, and the particle diameter of the primary particle can be easily controlled, and it is also possible to obtain the average particle diameter of the primary particles in a range of more than 50 nm and less than 80 nm, which is narrower than the range of the BET diameter of 80 nm to 200 nm shown in Patent Document 5.

In the method for producing copper particles according to the third aspect according to the present invention, a copper salt that is poorly soluble in water and is one or two or more kinds selected from the group consisting of copper carboxylates having 4 to 8 carbon atoms. Since the copper carboxylate is poorly soluble in water, the copper carboxylate is not dissolved and forms an aqueous dispersion liquid of copper carboxylate in a case where the copper carboxylate is mixed with water. In a case of using copper carboxylates having the numbers of carbon atoms different from each other, the particle diameters can be changed, and copper particles in which the average particle diameter of the primary particles is in a range of more than 50 nm and 200 nm or less can be obtained. In addition, the particle size distribution can be adjusted by using two or more kinds of copper salts.

In the method for producing copper particles according to the fourth aspect according to the present invention, an acidic range is created by using ammonium carboxylate, without using as a pH adjusting agent, for example, sodium hydroxide containing sodium, which is a factor of residual metal impurities, and thus it is possible to still further reduce metal impurities in the obtained copper particles.

### BRIEF DESCRIPTION OF DRAWINGS

FIG. 1 is a view schematically showing a cross-sectional structure of a copper particle according to an embodiment of the present invention.
FIG. 2 is a flowchart showing the production of copper particles according to the embodiment of the present invention.
FIG. 3 is a photographic image of copper particles of Example 5 captured with a scanning electron microscope.
FIG. 4 is a photographic image of copper particles of Example 10 captured with a scanning electron microscope.
FIG. 5 is a photographic image of copper particles of Example 16 captured with a scanning electron microscope.

### DESCRIPTION OF EMBODIMENTS

Next, a description will be made regarding embodiments for carrying out the present invention based on the drawings.

### [Copper particle]

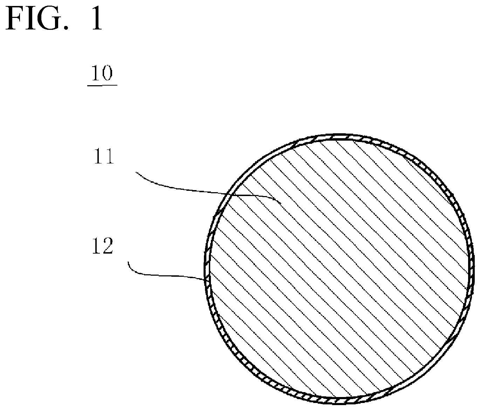

As shown in FIG. 1, in a copper particle 10 according to the embodiment, a surface of a core particle 11 consisting of metallic copper is coated with an organic protective film 12 formed from an organic molecule derived from copper carboxylate. In the copper particle 10, a total concentration of metal impurities having an oxidation reduction potential lower than that of copper is less than 10 ppm by mass. The total concentration of the impurities is preferably less than 1 ppm by mass. In a case where the total concentration of the impurities is 10 ppm by mass or more, there is a risk that the characteristics of other members are impaired due to the diffusion of metal impurities in a case where the copper particles are used as a wiring line material. For example, there is a risk that a substrate or the like which is subjected to wiring is contaminated with impurities, whereby the insulating properties of the substrate or the like are impaired.

As the copper carboxylate, a copper salt that is poorly soluble in water and is one or two or more kinds selected from the group consisting of copper carboxylates having 4 to 8 carbon atoms is preferably used. Examples thereof include copper tartrate (having 4 carbon atoms), copper citrate (having 6 carbon atoms), and copper phthalate (having 8 carbon atoms). However, examples thereof are not limited thereto, and copper benzoate (having 14 carbon atoms) or the like can also be used. The larger the number of carbon atoms is, copper particles having the smaller particle diameter can be obtained. A copper carboxylate having less than 4 carbon atoms is easily dissolved in water. In a case where copper carboxylate is dissolved in water, copper particles are formed in a case where an aqueous solution of a hydrazine compound is added. However, since the copper particles are not coated with an organic protective film derived from copper carboxylate, copper particles having a desired shape cannot be obtained. In a case where the number of carbon atoms exceeds 8, the dispersibility in water is bad although the solubility in water is poor. Examples of the metal having an oxidation reduction potential lower than that of copper, which is contained in the copper particle 10, include not only alkali metals such as potassium and sodium described in Patent Document 4, but also alkaline earth metals other than the alkali metals, and transition metals. The concentrations of these metals are measured by inductively coupled plasma mass spectrometry (ICP-MS). The reason why the impurity metal is defined as a metal having an oxidation reduction potential lower than that of copper is that metals such as gold and silver, which are noble than copper, have an oxidation reduction potential higher than that of copper and thus are precipitated regardless of the kind of reducing agent.

The average particle diameter of the copper particles 10 in a state where the copper particles 10 are primary particles is in a range of more than 50 nm and 200 nm or less. In Patent Document 5, since the lower limit value of the average particle diameter of the primary particles is set to 80 nm in terms of the BET diameter, there is a case where it is difficult to form a fine wiring pattern having a narrow pitch in a case of forming the wiring pattern from a paste which has been made using these particles. However, in the copper particles according to the present embodiment, the lower limit value thereof is set to a value exceeding 50 nm, and thus it is possible to easily form a finer wiring pattern having a narrower pitch, such as a wiring pattern typified in printing according to an ink jet method. In a case where the average particle diameter is 50 nm or less, there is a problem that an increase in viscosity occurs with a predetermined composition at the time when a paste is prepared using the copper particles. In addition, in a case where it exceeds 200 nm, the reaction area of the copper particles is not large, and the reactivity by heating is low, which makes it impossible to sinter the copper particles at a relatively low temperature. From the viewpoint that a fine wiring pattern having a narrow pitch can be easily formed, the average particle diameter of the primary particles is preferably in a range of more than 50 nm and less than 80 nm.

The average particle diameter of the primary particles is determined according to the following method. First, using a scanning electron microscope (SEM), a magnification is determined depending on the size of the copper particles, and an SEM image of the copper particles is captured. It is preferable to carry out imaging in a magnification range of 10,000 to 50,000 times. Next, the SEM image is analyzed using image analysis software, a Heywood diameter is determined for 300 or more particles per sample, and the arithmetic mean value of the Heywood diameter is taken as the average particle diameter of the primary particles.

The organic protective film 12 is composed of an organic molecule derived from copper carboxylate. The organic protective film 12 coats the surface of the core particle 11 consisting of metallic copper and plays a role in preventing the oxidation of the core particle 11 during the storage from the production to the time until a paste is obtained. Regarding the coating amount of the organic protective film, it is preferable to subject the copper particles to analysis by using a time-of-flight secondary ion mass spectrometry (TOF-SIMS). In this analysis method, copper particles are detected as a peak value in a case of being analyzed. The presence or absence of the organic protective film is measured with CuC₂O₂H⁻ ions and C₂H₃O₂⁻ ions. In the organic protective film according to the present embodiment, the core particles 11 are coated so that the amount of detected CuC₂O₂H⁻ ions is in a range of 0.02 times or more with respect to an amount of detected Cu⁺ ions, and an amount of detected C₂H₃O₂⁻ ions is in a range of 0.02 times or more with respect to the amount of the detected Cu⁺ ions, in a case where copper particles are analyzed by the above-described analysis method. The amount of detected CuC₂O₂H⁻ ions with respect to the amount of detected Cu⁺ ions and the amount of detected C₂H₃O₂⁻ ions with respect to the amount of detected Cu⁺ ions each indicate the amount of the coating material derived from copper carboxylate, which is present on the core particle surface.

In a case where the amount of the detected ions is within the above range, the amount of the organic protective film is not insufficient in protecting the core particles 11. In a case where it is less than the lower limit value of the above range, the coating amount of the organic protective film is small, the surfaces of the core particles become active, and the copper particles are oxidized.

### [Method for producing copper particles]

In the method for producing copper particles according to the present embodiment, a pH adjusting agent is added to an aqueous dispersion liquid of copper carboxylate to adjust the pH of the aqueous dispersion liquid to be in an acidic range of 3 or more and less than 6, an aqueous solution of a hydrazine compound having an oxidation reduction potential in a range of -0.7 V to -0.5 V is added to the pH-adjusted aqueous dispersion liquid of copper carboxylate and mixed to obtain a mixed liquid, and then the mixed liquid is heated to a temperature of 60°C to 75°C, followed by being held for 1.5 hours to 2.5 hours in an inert gas atmosphere, and the copper carboxylate is reduced to obtain a copper particle dispersion liquid in which the copper particles are dispersed.

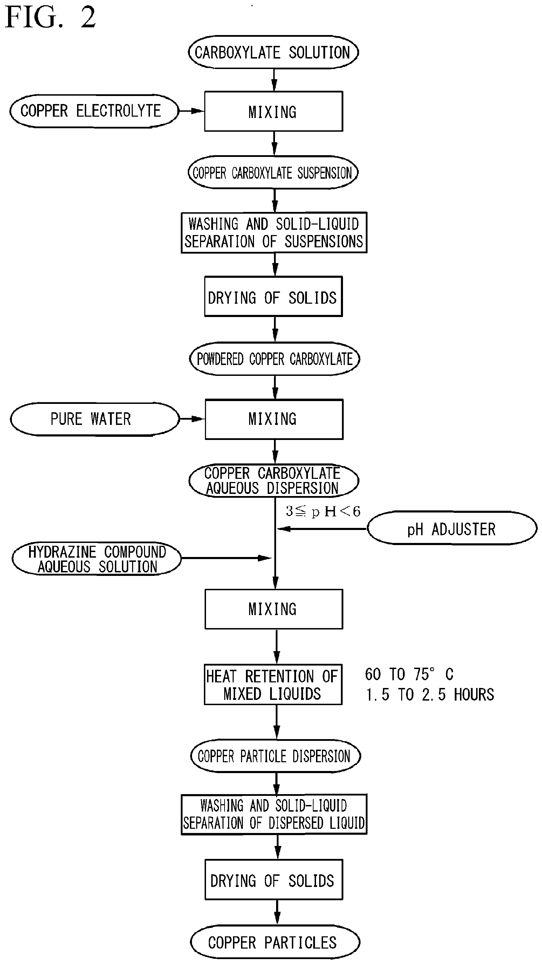

As the copper carboxylate as a starting raw material, it is possible to use a commercially available copper carboxylate hydrate, those synthesized by reacting copper sulfate for industrial use with sodium carboxylate or ammonium carboxylate, or the like. In addition, as this copper carboxylate, a powdery high-purity copper carboxylate may be used where it is obtained, as shown in FIG. 2, by placing a carboxylate aqueous solution and a copper electrolytic solution in a reaction chamber in an air atmosphere, stirring them at a temperature of 60°C to 80°C to cause a reaction to obtain a copper carboxylate suspension, followed by washing and solid-liquid separation, and drying the solid content. Here, the carboxylate aqueous solution is prepared by dissolving a sodium salt or ammonium salt of a carboxylic acid such as citric acid, phthalic acid, benzoic acid, or tartaric acid in pure water such as ion exchange water or distilled water.

As shown in FIG. 2, a powdery copper carboxylate is placed in pure water such as ion exchange water or distilled water at room temperature and stirred to be uniformly dispersed, thereby obtaining an aqueous dispersion liquid of copper carboxylate having a concentration of 25% by mass or more and 40% by mass or less. A pH adjusting agent is added to the aqueous dispersion liquid of copper carboxylate to adjust the pH of the aqueous dispersion liquid to be in an acidic range of 3 or more and less than 6. The pH adjusting agent is preferably ammonium carboxylate which does not contain a metal component. At a pH of less than 3, the elution of copper ions from the copper carboxylate is slow, the reaction does not proceed rapidly, and it is difficult to obtain the particles of interest, and thus the pH adjustment with the pH adjusting agent is carried out to a pH of 3 or more and less than 6. In addition, at a pH of 6 or more, in a case where the copper carboxylate is reduced with a hydrazine compound, the eluted copper ion easily becomes copper (II) hydroxide and easily precipitates, and thus copper particles cannot be produced in a high yield. In addition, since the reducing power of hydrazine becomes stronger and the reaction proceeds more easily, the average particle diameter of the primary particles increases. The preferred pH is 4 or more and 5 or less.

As shown in FIG. 2, an aqueous solution of a hydrazine compound having an oxidation reduction potential in a range of -0.7 V to -0.5 V is added as a reducing agent to this pH-adjusted aqueous dispersion liquid of copper carboxylate in an atmosphere and mixed to obtain a mixed liquid. It is known that a hydrazine-based reducing agent, including hydrazine monohydrate, reacts differently in an acidic range and an alkaline range.

Here, the oxidation reduction potential means a potential difference with respect to a normal hydrogen electrode (NHE). In a case where the oxidation reduction potential is less than -0.7 V, the oxidation reduction potential difference with respect to copper increases, and thus there is a problem that metal impurities of 10 ppm by mass or more are contained. In a case where it exceeds -0.5 V, the oxidation reduction potential difference with respect to copper increases, and thus there is a problem that the reduction of copper carboxylate is not completed. A preferred range of the oxidation reduction potential is -0.6 V to -0.5 V.

The oxidation reduction potential E (V) is represented by Expression (1) based on the pH value.
(Acidic range) N₂H₅⁺ = N₂ + 5H⁺ + 4e⁻
(Alkaline range) N₂H₄ + 4OH⁻ = N₂ + 4H₂O + 4e⁻
Oxidation reduction potential E (V): -0.23 - 0.075 × pH (1)

For example, in a case where the pH is 3, Expression (1) is [-0.23 - 0.075 × 3], and thus the oxidation reduction potential is -0.455 V. It is noted that the oxidation reduction potential in Examples and Comparative Examples which will be described later is rounded off to one decimal place, and thus for example, -0.455 V is indicated by -0.5 V.

Next, as shown in FIG. 2, this mixed liquid is heated to a temperature of 60°C or higher and 75°C or lower, followed by being held for 1.5 hours or more and 2.5 hours or less in an inert gas atmosphere, the copper carboxylate is reduced to generate core particles, and an organic protective film derived from copper carboxylate is formed on the surfaces of these core particles, whereby a dispersion liquid of copper particles having a desired particle diameter is made. The reason why heating and holding are carried out in an inert gas atmosphere is to prevent the oxidation of the core particles. In a case where the heating temperature of the mixed liquid is lower than 60°C, the reducing power of the copper carboxylate is too low, and thus the reduction reaction is not completed. In a case where the temperature exceeds 75°C or the holding time exceeds 2.5 hours, the amount of copper ions eluted from copper carboxylate increases, and the reaction rate increases, whereby metal impurities of 10 ppm by mass or more are contained, and the coating amount of the organic protective film decreases. Further, it is difficult to control the particle diameters of the primary particles, and it is difficult to obtain an average particle diameter of the primary particles in a range of 200 nm or less. In addition, in a case where the holding time is less than 1.5 hours, copper carboxylate is not completely reduced, and thus desired particles cannot be obtained. In a case where it exceeds 2.5 hours, the disappearance of the fine particles and the growth of the coarse particles occur to relax the free energy generated by the particle diameter difference, whereby grain growth occurs, and as a result, it is not possible to obtain primary particles having an average particle diameter in a range of 200 nm or less. A preferred heating temperature is 65°C or higher and 70°C or lower, and a preferred holding time is 2 hours or more and 2.5 hours or less.

The reason why the copper carboxylate is reduced in an inert gas atmosphere is to prevent the oxidation of the copper eluted in the liquid. Examples of the inert gas include nitrogen gas and argon gas. The hydrazine compound has advantages in that, in a case of reducing copper carboxylate under acidic conditions, no residue is generated after the reduction reaction, the safety is relatively high, and the handling is easy. Examples of this hydrazine compound include hydrazine monohydrate, anhydrous hydrazine, hydrazine hydrochloride, and hydrazine sulfate. Among them, hydrazine monohydrate is preferable because it is desirable that there is no component which can be impurities, such as sulfur and chlorine.

In general, the copper generated in an acidic liquid having a pH of less than 6 dissolves. However, in the present embodiment, in a case where the hydrazine compound which is a reducing agent is added to an acidic liquid having a pH of less than 6 and mixed to generate core particles in the liquid, the surfaces of the core particles are rapidly coated with a component derived from a carboxylate ion which has been generated from copper carboxylate, which suppresses the dissolution of the core particles. It is preferable to keep the temperature of the acidic liquid having a pH of less than 6 at 60°C or higher and 70°C or lower since the reduction reaction easily proceeds.

As shown in FIG. 2, after washing the dispersion liquid of the copper particles, this washed dispersion liquid is subjected to solid-liquid separation in an inert gas atmosphere by using, for example, a centrifuge, and dried by a freeze drying method and/or a vacuum drying method, whereby the above-described copper particles of interest in which the organic protective film is formed on the surfaces of the core particles are obtained. Since the surfaces of the core particles of the copper particles are coated with the organic protective film, it is possible to prevent the particles from being oxidized even in a case of being stored in the atmospheric air until they are used as a paste for a wiring line or bonding.

### EXAMPLES

Next, Examples of the present invention will be described in detail together with Comparative Examples.

First, Table 1 below shows the kind of copper carboxylate that is used in Examples and Comparative Examples and the number of carbon atoms thereof the total concentration of metal impurities having an oxidation reduction potential lower than that of copper, and the impurity concentration of each metal. In addition, the lower part of Table 1 shows the method for producing each copper carboxylate. The total concentration of the metal impurities having an oxidation reduction potential lower than that of copper, shown in Table 1, is an approximate value.

**TABLE 1**

| Copper carboxylate | | Total concentration of metal impurities less noble than copper (ppm by mass) | Concentration of metal less noble than copper (ppm by mass) | | | | | | | | | | |
|---|---|---|---|---|---|---|---|---|---|---|---|---|---|
| | | | K | Na | Mg | Al | Si | Ca | Fe | Ni | Zn | Sn | Pb |
| Kind | Number of carbon atoms | | | | | | | | | | | | |
| Copper citrate | 6 | 1200 | < 1 | 1100 | < 1 | < 1 | < 1 | < 1 | 45 | 10 | 10 | < 1 | 9 |
| Copper phthalate | 8 | 90 | < 1 | < 1 | < 1 | < 1 | < 1 | < 1 | 55 | 12 | 10 | < 1 | 10 |
| Copper tartrate | 4 | 70 | < 1 | < 1 | < 1 | < 1 | < 1 | < 1 | 40 | 8 | 12 | < 1 | 9 |
| Copper benzoate | 14 | 1300 | < 1 | 1200 | < 1 | < 1 | < 1 | < 1 | 55 | 15 | 10 | < 1 | 12 |

| | | | | | | | | | | | | | |
|---|---|---|---|---|---|---|---|---|---|---|---|---|---|
| (Note) Copper tartrate was prepared by reacting industrial copper sulfate with ammonium tartrate. Copper citrate was prepared by reacting industrial copper sulfate with sodium citrate. Copper phthalate was prepared by reacting industrial copper sulfate with ammonium phthalate. Copper benzoate was prepared by reacting industrial copper sulfate with sodium benzoate. | | | | | | | | | | | | | |

### <Example 1>

First, copper citrate shown in Table 1 was prepared as copper carboxylate as a starting raw material. This copper citrate was placed in ion exchange water at room temperature and stirred using a stirring blade to prepare an aqueous dispersion liquid of copper citrate having a concentration of 30% by mass. Next, an aqueous solution of ammonium citrate as a pH adjusting agent was added to this aqueous dispersion liquid of copper citrate, and the pH of the aqueous dispersion liquid was adjusted to a pH of 3. Next, the temperature of the pH-adjusted liquid was adjusted to a temperature of 50°C, an aqueous solution of hydrazine monohydrate (2-fold dilution) having an oxidation reduction potential of -0.5 V, which is 1.2 times the equivalent amount with which copper ions can be reduced, was added as a reducing agent to the pH-adjusted liquid at once in a nitrogen gas atmosphere, and the resultant mixture was uniformly mixed using a stirring blade. Further, in order to synthesize copper particles of interest, the mixed liquid of the aqueous dispersion liquid and the reducing agent was heated to 70°C in a nitrogen gas atmosphere, which is the holding temperature, followed by being held at 70°C for 2 hours. Particles that were generated in the liquid heated and held were subjected to solid-liquid separation and recovered using a centrifuge. The recovered particles were dried by a vacuum drying method to produce the copper particles of Example 1.

Table 2 below shows the production conditions of Example 1 and Examples 2 to 26 described below, and Table 3 below shows the production conditions for the copper particles of Comparative Examples 1 to 22.

**TABLE 2**

| | Production conditions for copper particles | | | | | | |
|---|---|---|---|---|---|---|---|
| | Starting raw material | pH of adjusted liquid | Reducing agent | Additive such as surface protective agent | Oxidation reduction potential E of reducing agent (V) | Holding temperature at time of synthesis (°C) | Holding time (Hr) |
| Example 1 | Copper citrate | 3 | Hydrazine monohydrate | Absent | -0.5 | 70 | 2.0 |
| Example 2 | Copper citrate | 4 | Hydrazine monohydrate | Absent | -0.5 | 70 | 2.0 |
| Example 3 | Copper citrate | 5 | Hydrazine monohydrate | Absent | -0.6 | 70 | 2.0 |
| Example 4 | Copper citrate | 5 | Hydrazine monohydrate | Absent | -0.6 | 70 | 1.5 |
| Example 5 | Copper citrate | 5 | Hydrazine monohydrate | Absent | -0.6 | 70 | 2.5 |
| Example 6 | Copper citrate | 5 | Hydrazine monohydrate | Absent | -0.6 | 60 | 2.5 |
| Example 7 | Copper citrate | 5 | Anhydrous hydrazine | Absent | -0.5 | 70 | 2.0 |
| Example 8 | Copper citrate | 4 | Hydrazine hydrochloride | Absent | -0.5 | 70 | 2.0 |
| Example 9 | Copper citrate | 4 | Hydrazine sulfate | Absent | -0.5 | 70 | 2.0 |
| Example 10 | Copper phthalate | 3 | Hydrazine monohydrate | Absent | -0.5 | 70 | 2.0 |
| Example 11 | Copper phthalate | 4 | Hydrazine monohydrate | Absent | -0.5 | 70 | 2.0 |
| Example 12 | Copper phthalate | 5 | Hydrazine monohydrate | Absent | -0.6 | 70 | 2.0 |
| Example 13 | Copper phthalate | 5 | Hydrazine monohydrate | Absent | -0.6 | 60 | 2.0 |
| Example 14 | Copper phthalate | 5 | Hydrazine monohydrate | Absent | -0.6 | 75 | 2.0 |
| Example 15 | Copper phthalate | 5 | Hydrazine monohydrate | Absent | -0.6 | 70 | 1.5 |
| Example 16 | Copper phthalate | 5 | Hydrazine monohydrate | Absent | -0.6 | 70 | 2.5 |
| Example 17 | Copper tartrate | 3 | Hydrazine monohydrate | Absent | -0.5 | 70 | 2.0 |
| Example 18 | Copper tartrate | 4 | Hydrazine monohydrate | Absent | -0.5 | 70 | 2.0 |
| Example 19 | Copper tartrate | 5 | Hydrazine monohydrate | Absent | -0.6 | 70 | 2.0 |
| Example 20 | Copper tartrate | 5 | Hydrazine monohydrate | Absent | -0.6 | 60 | 2.0 |
| Example 21 | Copper tartrate | 5 | Hydrazine monohydrate | Absent | -0.6 | 75 | 2.0 |
| Example 22 | Copper benzoate | 3 | Hydrazine monohydrate | Absent | -0.5 | 70 | 2.0 |
| Example 23 | Copper benzoate | 4 | Hydrazine monohydrate | Absent | -0.5 | 70 | 2.0 |
| Example 24 | Copper benzoate | 5 | Hydrazine monohydrate | Absent | -0.6 | 70 | 2.0 |
| Example 25 | Copper benzoate | 5 | Hydrazine monohydrate | Absent | -0.6 | 60 | 2.0 |
| Example 26 | Copper benzoate | 5 | Hydrazine monohydrate | Absent | -0.6 | 75 | 2.0 |

**TABLE 3**

| | Production conditions for copper particles | | | | | | |
|---|---|---|---|---|---|---|---|
| | Starting raw material | pH of adjusted liquid | Reducing agent | Additive such as surface protective agent (adding amount with respect to particles) | Oxidation reduction potential E of reducing agent (V) | Holding temperature at time of synthesis (°C) | Holding time (Hr) |
| Comparative Example 1 | Copper citrate | 2 | Hydrazine monohydrate | Absent | -0.4 | 70 | 2.0 |
| Comparative Example 2 | Copper citrate | 8 | Hydrazine monohydrate | Absent | -0.8 | 70 | 2.0 |
| Comparative Example 3 | Copper citrate | 10 | Hydrazine monohydrate | Absent | -1.0 | 70 | 2.0 |
| Comparative Example 4 | Copper citrate | 5 | Ammonium formate | Absent | 0.3 | 70 | 2.0 |
| Comparative Example 5 | Copper citrate | 3 | Formic acid | Absent | -0.2 | 70 | 1.5 |
| Comparative Example 6 | Copper citrate | 5 | Hydrazine monohydrate | Absent | -0.6 | 70 | 1.0 |
| Comparative Example 7 | Copper citrate | 5 | Hydrazine monohydrate | Absent | -0.6 | 60 | 3.0 |
| Comparative Example 8 | Copper citrate | 5 | Hydrazine monohydrate | Absent | -0.6 | 80 | 1.5 |
| Comparative Example 9 | Copper citrate | 5 | Hydrazine monohydrate | Absent | -0.6 | 55 | 2.5 |
| Comparative Example 10 | Copper citrate | 6 | Hydrazine monohydrate | Absent | -0.7 | 70 | 2.0 |
| Comparative Example 11 | Copper phthalate | 8 | Hydrazine monohydrate | Absent | -0.9 | 70 | 2.0 |
| Comparative Example 12 | Copper phthalate | 10 | Hydrazine monohydrate | Absent | -1.0 | 70 | 2.0 |
| Comparative Example 13 | Copper tartrate | 8 | Hydrazine monohvdrate | Absent | -0.9 | 70 | 2.0 |
| Comparative Example 14 | Copper tartrate | 10 | Hydrazine monohydrate | Absent | -1.0 | 70 | 2.0 |
| Comparative Example 15 | Copper benzoate | 8 | Hydrazine monohydrate | Absent | -0.9 | 70 | 2.0 |
| Comparative Example 16 | Copper benzoate | 10 | Hydrazine monohydrate | Absent | -1.0 | 70 | 2.0 |
| Comparative Example 17 | Copper ammine complex | 5 | Hydrazine monohydrate | Absent | -0.9 | 70 | 2.0 |
| Comparative Example 18 | Copper ammine complex | 5 | Hydrazine monohydrate | Absent | -1.0 | 70 | 2.0 |
| Comparative Example 19 | Copper citrate | 5 | Hydrazine monohydrate | Methyl cellulose (5% bv mass) | -0.6 | 70 | 1.5 |
| Comparative Example 20 | Copper citrate | 5 | Hydrazine monohydrate | Polyethylene glycol (5% by mass) | -0.6 | 70 | 1.5 |
| Comparative Example 21 | Copper citrate | 5 | Hydrazine monohydrate | Polyvinyl alcohol (5% by mass) | -0.6 | 70 | 1.5 |
| Comparative Example 22 | Copper citrate | 5 | Hydrazine monohvdrate | Gelatin (5% by mass) | -0.6 | 70 | 1.5 |

### <Examples 2 to 26 and Comparative Examples 1 to 3 and 6 to 16>

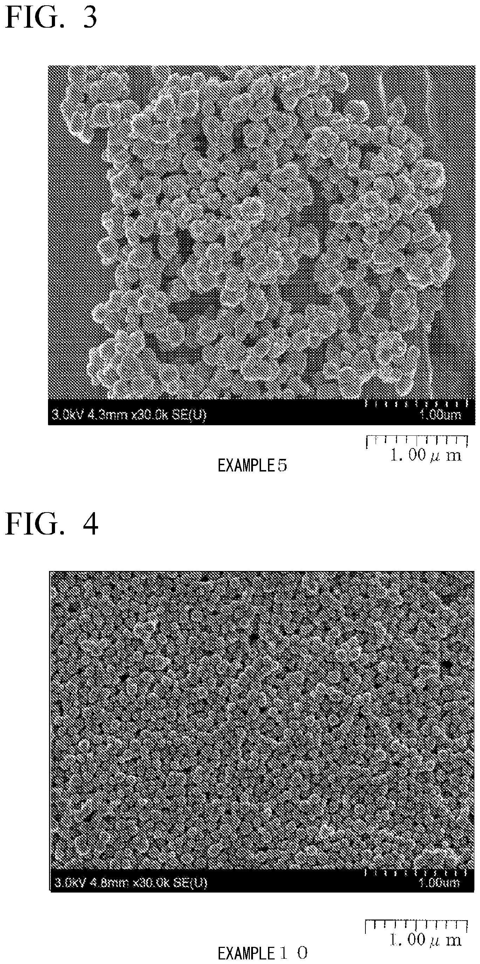

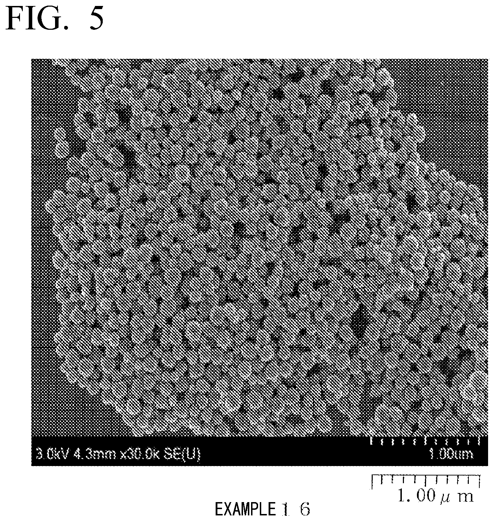

Copper carboxylates that are the same as or different from the copper citrate as the starting raw material in Example 1 were used, the adjusted pH values were identical to or changed from those of Example 1, the kinds of reducing agents and the oxidation reduction potentials were identical to or changed from those in Example 1, and the holding temperatures and the holding times at the time of the synthesis of copper particles were identical to or changed from those of Example 1. In the same manner as in Example 1, except for the changes described above, copper particles of Examples 2 to 26 and Comparative Examples 1 to 3 and 6 to 16 were produced. Among these copper particles, copper particles obtained in Example 5, Example 10, and Example 16 were imaged with a scanning electron microscope to capture photographic images, which are each shown in FIGS. 3, 4, and 5.

### <Comparative Example 4>

The hydrazine monohydrate which was the reducing agent of Example 1 was changed to ammonium formate, the oxidation reduction potential of this reducing agent was changed to 0.3 V, and the pH value thereof was changed to 5. The holding temperature and the holding time at the time of the synthesis in Example 1 were not changed. In the same manner as in Example 1, except for the changes described above, copper particles of Comparative Example 4 were produced.

### <Comparative Example 5>

The hydrazine monohydrate which was the reducing agent of Example 1 was changed to formic acid, and the oxidation reduction potential of this reducing agent was changed to -0.2 V. The holding temperature at the time of the synthesis in Example 1 was not changed, but the holding time at the time of the synthesis in Example 1 was changed to 1.5 hours. In the same manner as in Example 1, except for the changes described above, copper particles of Comparative Example 5 were produced.

### <Comparative Example 17>

A copper ammine complex was used instead of the copper carboxylate of Example 1, the pH value thereof was changed to 5, and the oxidation reduction potential of the reducing agent was changed to -0.9 V by using the same reducing agent as in Example 1. In the same manner as in Example 1, except for the changes described above, copper particles of Comparative Example 17 were produced.

### <Comparative Example 18>

A copper ammine complex was used instead of the copper carboxylate of Example 1, the pH value thereof was changed to 5, and the oxidation reduction potential of the reducing agent was changed to -1.0 V by using the same reducing agent as in Example 1. In the same manner as in Example 1, except for the changes described above, copper particles of Comparative Example 18 were produced.

### <Comparative Example 19>

The pH value in Example 1 was changed to 5, the oxidation reduction potential of the reducing agent was changed to -0.6 V, and the holding temperature at the time of the synthesis was not changed, but the holding time at the time of the synthesis was changed to 1.5 hours. Further, as a surface protective agent for the core particles, 5% by mass of methyl cellulose was added to the particles. In the same manner as in Example 1, except for the changes described above, copper particles of Comparative Example 19 were produced.

### <Comparative Example 20>

Methylcellulose, which is the surface protective agent for the core particles used in Comparative Example 19, was changed to polyethylene glycol, and 5% by mass thereof was added to the particles. In the same manner as in Comparative Example 19, except for the changes described above, copper particles of Comparative Example 20 were produced.

### <Comparative Example 21>

Methylcellulose, which is the surface protective agent for the core particles used in Comparative Example 19, was changed to polyvinyl alcohol, and 5% by mass thereof was added to the particles. In the same manner as in Comparative Example 19, except for the changes described above, copper particles of Comparative Example 21 were produced.

### <Comparative Example 22>

Methylcellulose, which is the surface protective agent for the core particles used in Comparative Example 19, was changed to gelatin, and 5% by mass thereof was added to the particles. In the same manner as in Comparative Example 19, except for the changes described above, copper particles of Comparative Example 22 were produced.

### <Comparative evaluation test and results>

In Examples 1 to 26 and Comparative Examples 1 to 22, where the copper particles could be produced, (1) the average particle diameter of the primary particles of the copper particles, (2) the total concentration of the metal impurities having an oxidation reduction potential lower than that of copper, and (3) the amount of detected CuC₂O₂H⁻ ions and the amount of detected C₂H₃O₂⁻ ions with respect to the amount of detected Cu⁺ ions in a case where the copper particles are analyzed using a time-of-flight secondary ion mass spectrometry (TOF-SIMS) were each determined by the above-described methods. The results are each shown in Tables 4 and 6 below. Here, the total concentration of metal impurities having an oxidation reduction potential lower than that of copper is the total concentration of each of the metal impurities. The total concentration of metal impurities having an oxidation reduction potential lower than that of copper and the concentration of each of the metal impurities are shown in Table 5 and Table 7 below. It is noted that the values for the above items are not described with regard to Comparative Example 1, Comparative Examples 4 to 6, and Comparative Example 9, in which the synthesis could not be carried out due to insufficient reduction.

**TABLE 4**

| | Average particle diameter of primary particles (nm) | Total concentration of metal impurities less noble than copper (ppm by mass) | Time-of-flight secondary ion mass spectrometry | |
|---|---|---|---|---|
| | | | CuC₂O₂H⁻ ion/Cu⁺ ion | C₂H₃O₂⁻ ion/Cu⁻ ion |
| Example 1 | 78 | < 1 | 0.04 | 0.03 |
| Example 2 | 122 | < 1 | 0.04 | 0.03 |
| Example 3 | 135 | < 10 | 0.04 | 0.03 |
| Example 4 | 95 | < 1 | 0.04 | 0.03 |
| Example 5 | 140 | < 10 | 0.04 | 0.03 |
| Example 6 | 88 | < 1 | 0.04 | 0.03 |
| Example 7 | 121 | < 1 | 0.04 | 0.03 |
| Example 8 | 121 | < 10 | 0.04 | 0.03 |
| Example 9 | 140 | < 1 | 0.04 | 0.03 |
| Example 10 | 78 | < 1 | 0.03 | 0.03 |
| Example 11 | 85 | < 1 | 0.03 | 0.03 |
| Example 12 | 110 | < 1 | 0.03 | 0.03 |
| Example 13 | 108 | < 1 | 0.03 | 0.03 |
| Example 14 | 115 | < 1 | 0.03 | 0.03 |
| Example 15 | 77 | < 1 | 0.03 | 0.03 |
| Example 16 | 90 | < 10 | 0.03 | 0.03 |
| Example 17 | 120 | < 1 | 0.04 | 0.03 |
| Example 18 | 155 | < 1 | 0.05 | 0.04 |
| Example 19 | 180 | < 10 | 0.04 | 0.04 |
| Example 20 | 133 | < 1 | 0.05 | 0.03 |
| Example 21 | 177 | < 10 | 0.04 | 0.04 |
| Example 22 | 51 | < 1 | 0.02 | 0.02 |
| Example 23 | 78 | < 10 | 0.02 | 0.02 |
| Example 24 | 90 | < 1 | 0.03 | 0.03 |
| Example 25 | 61 | < 10 | 0.03 | 0.03 |
| Example 26 | 100 | < 10 | 0.03 | 0.03 |

**TABLE 5**

| | Total concentration of metal impurities less noble than copper (ppm by mass) | Concentration of metal less noble than copper (ppm by mass) | | | | | | | | | | |
|---|---|---|---|---|---|---|---|---|---|---|---|---|
| | | K | Na | Mg | Al | Si | Ca | Fe | Ni | Zn | Sn | Pb |
| Example 1 | < 1 | < 1 | < 1 | < 1 | < 1 | < 1 | < 1 | < 1 | < 1 | < 1 | < 1 | < 1 |
| Example 2 | < 1 | < 1 | < 1 | < 1 | < 1 | < 1 | < 1 | < 1 | < 1 | < 1 | < 1 | < 1 |
| Example 3 | < 10 | < 1 | < 1 | < 1 | < 1 | < 1 | < 1 | 1 | < 1 | < 1 | < 1 | < 1 |
| Example 4 | < 1 | < 1 | < 1 | < 1 | < 1 | < 1 | < 1 | < 1 | < 1 | < 1 | < 1 | < 1 |
| Example 5 | < 10 | < 1 | < 1 | < 1 | < 1 | < 1 | < 1 | 1 | < 1 | < 1 | < 1 | < 1 |
| Example 6 | < 1 | < 1 | < 1 | < 1 | < 1 | < 1 | < 1 | < 1 | < 1 | < 1 | < 1 | < 1 |
| Example 7 | < 1 | < 1 | < 1 | < 1 | < 1 | < 1 | < 1 | < 1 | < 1 | < 1 | < 1 | < 1 |
| Example 8 | < 10 | < 1 | < 1 | < 1 | < 1 | < 1 | < 1 | 1 | < 1 | < 1 | < 1 | < 1 |
| Example 9 | < 1 | < 1 | < 1 | < 1 | < 1 | < 1 | < 1 | < 1 | < 1 | < 1 | < 1 | < 1 |
| Example 10 | < 1 | < 1 | < 1 | < 1 | < 1 | < 1 | < 1 | < 1 | < 1 | < 1 | < 1 | < 1 |
| Example 11 | < 1 | < 1 | < 1 | < 1 | < 1 | < 1 | < 1 | 1 | < 1 | < 1 | < 1 | < 1 |
| Example 12 | < 1 | < 1 | < 1 | < 1 | < 1 | < 1 | < 1 | < 1 | < 1 | < 1 | < 1 | < 1 |
| Example 13 | < 1 | < 1 | < 1 | < 1 | < 1 | < 1 | < 1 | < 1 | < 1 | < 1 | < 1 | < 1 |
| Example 14 | < 1 | < 1 | < 1 | < 1 | < 1 | < 1 | < 1 | 1 | < 1 | < 1 | < 1 | < 1 |
| Example 15 | < 1 | < 1 | < 1 | < 1 | < 1 | < 1 | < 1 | < 1 | < 1 | < 1 | < 1 | < 1 |
| Example 16 | < 10 | < 1 | < 1 | < 1 | < 1 | < 1 | < 1 | 1 | < 1 | < 1 | < 1 | < 1 |
| Example 17 | < 1 | < 1 | < 1 | < 1 | < 1 | < 1 | < 1 | < 1 | < 1 | < 1 | < 1 | < 1 |
| Example 18 | < 1 | < 1 | < 1 | < 1 | < 1 | < 1 | < 1 | < 1 | < 1 | < 1 | < 1 | < 1 |
| Example 19 | < 10 | < 1 | < 1 | < 1 | < 1 | < 1 | < 1 | 1 | < 1 | < 1 | < 1 | < 1 |
| Example 20 | < 1 | < 1 | < 1 | < 1 | < 1 | < 1 | < 1 | < 1 | < 1 | < 1 | < 1 | < 1 |
| Example 21 | < 10 | < 1 | < 1 | < 1 | < 1 | < 1 | < 1 | 1 | < 1 | < 1 | < 1 | < 1 |
| Example 22 | < 1 | < 1 | < 1 | < 1 | < 1 | < 1 | < 1 | < 1 | < 1 | < 1 | < 1 | < 1 |
| Example 23 | < 10 | < 1 | < 1 | < 1 | < 1 | < 1 | < 1 | 1 | < 1 | < 1 | < 1 | < 1 |
| Example 24 | < 1 | < 1 | < 1 | < 1 | < 1 | < 1 | < 1 | < 1 | < 1 | < 1 | < 1 | < 1 |
| Example 25 | < 10 | < 1 | < 1 | < 1 | < 1 | < 1 | < 1 | 1 | < 1 | < 1 | < 1 | < 1 |
| Example 26 | < 10 | < 1 | < 1 | < 1 | < 1 | < 1 | < 1 | 2 | < 1 | < 1 | < 1 | < 1 |

**TABLE 6**

| | Average particle diameter of primary particles (nm) | Total concentration of metal impurities less noble than copper (ppm by mass) | Time-of-flight secondary ion mass spectrometry | |
|---|---|---|---|---|
| | | | CuC₂O₂H⁻ ion/Cu⁺ ion | C₂H₃O₂⁻ ion/Cu⁺ ion |
| Comparative Example 1 | Production was not possible (not reduced) | | | |
| Comparative Example 2 | 285 | 20 | 0.04 | 0.03 |
| Comparative Example 3 | 320 | 60 | 0.04 | 0.03 |
| Comparative Example 4 | Production was not possible (not reduced) | | | |
| Comparative Example 5 | Production was not possible (not reduced) | | | |
| Comparative Example 6 | Production was not possible (not reduced) | | | |
| Comparative Example 7 | 251 | < 10 | < 0.01 | < 0.01 |
| Comparative Example 8 | 225 | 20 | < 0.01 | < 0.01 |
| Comparative Example 9 | Production was not possible (not reduced) | | | |
| Comparative Example 10 | 188 | 20 | 0.04 | 0.03 |
| Comparative Example 11 | 331 | 30 | 0.03 | 0.03 |
| Comparative Example 12 | 399 | 50 | 0.03 | 0.03 |
| Comparative Example 13 | 180 | 30 | 0.05 | 0.03 |
| Comparative Example 14 | 185 | 50 | 0.05 | 0.03 |
| Comparative Example 15 | 120 | 30 | 0.02 | 0.02 |
| Comparative Example 16 | 133 | 40 | 0.02 | 0.02 |
| Comparative Example 17 | 400 | 50 | Not detected | Not detected |
| Comparative Example 18 | 166 | 90 | Not detected | Not detected |
| Comparative Example 19 | 95 | 20 | 0.04 | 0.03 |
| Comparative Example 20 | 90 | 40 | 0.04 | 0.03 |
| Comparative Example 21 | 103 | 50 | 0.04 | 0.03 |
| Comparative Example 22 | 88 | 80 | 0.04 | 0.03 |

**TABLE 7**

| | Total concentration of metal impurities less noble than copper (ppm by mass) | Concentration of metal less noble than copper (ppm by mass) | | | | | | | | | | |
|---|---|---|---|---|---|---|---|---|---|---|---|---|
| | | K | Na | Mg | Al | Si | Ca | Fe | Ni | Zn | Sn | Pb |
| Comparative Example 1 | - | - | - | - | - | - | - | - | - | - | - | - |
| Comparative Example 2 | 20 | < 1 | 5 | < 1 | < 1 | < 1 | < 1 | 6 | 5 | 1 | < 1 | < 1 |
| Comparative Example 3 | 60 | < 1 | 18 | < 1 | < 1 | < 1 | < 1 | 15 | 14 | 4 | < 1 | < 1 |
| Comparative Example 4 | - | - | - | - | - | - | - | - | - | - | - | - |
| Comparative Example 5 | - | - | - | - | - | - | - | - | - | - | - | - |
| Comparative Example 6 | - | - | - | - | - | - | - | - | - | - | - | - |
| Comparative Example 7 | < 10 | < 1 | < 1 | < 1 | < 1 | < 1 | < 1 | 3 | < 1 | < 1 | < 1 | < 1 |
| Comparative Example 8 | 20 | < 1 | < 1 | < 1 | < 1 | < 1 | < 1 | 7 | 5 | < 1 | < 1 | < 1 |
| Comparative Example 9 | - | - | - | - | - | - | - | - | - | - | - | - |
| Comparative Example 10 | 20 | < 1 | 3 | < 1 | < 1 | < 1 | < 1 | 6 | 6 | 1 | < 1 | < 1 |
| Comparative Example 11 | 30 | < 1 | 12 | < 1 | < 1 | < 1 | < 1 | 8 | 5 | 1 | < 1 | < 1 |
| Comparative Example 12 | 50 | < 1 | 18 | < 1 | < 1 | < 1 | < 1 | 14 | 9 | 3 | < 1 | < 1 |
| Comparative Example 13 | 30 | < 1 | 13 | < 1 | < 1 | < 1 | < 1 | 6 | 4 | 2 | < 1 | < 1 |
| Comparative Example 14 | 50 | < 1 | 18 | < 1 | < 1 | < 1 | < 1 | 12 | 11 | 4 | < 1 | < 1 |
| Comparative Example 15 | 30 | < 1 | 19 | < 1 | < 1 | < 1 | < 1 | 4 | 1 | 1 | < 1 | < 1 |
| Comparative Example 16 | 40 | < 1 | 27 | < 1 | < 1 | < 1 | < 1 | 8 | 2 | 2 | < 1 | < 1 |
| Comparative Example 17 | 60 | < 1 | < 1 | < 1 | < 1 | < 1 | < 1 | 44 | 10 | 1 | < 1 | 3 |
| Comparative Example 18 | 90 | < 1 | < 1 | < 1 | < 1 | < 1 | < 1 | 48 | 22 | 6 | < 1 | 8 |
| Comparative Example 19 | 20 | < 1 | 12 | < 1 | < 1 | < 1 | < 1 | 3 | < 1 | < 1 | < 1 | < 1 |
| Comparative Example 20 | 40 | 30 | < 1 | < 1 | < 1 | < 1 | < 1 | 5 | < 1 | < 1 | < 1 | < 1 |
| Comparative Example 21 | 50 | < 1 | 43 | < 1 | < 1 | < 1 | < 1 | 3 | < 1 | < 1 | < 1 | < 1 |
| Comparative Example 22 | 80 | < 1 | 18 | < 1 | < 1 | < 1 | 53 | 8 | < 1 | < 1 | < 1 | < 1 |

| | | | | | | | | | | | | |
|---|---|---|---|---|---|---|---|---|---|---|---|---|
| (Note) "< 1" means lower than the lower limit of quantification. In addition, "-" means detection is impossible. | | | | | | | | | | | | |

As is revealed from Table 6 and Table 7, in Comparative Example 1, although the mixed liquid was heated at 70°C for 2 hours since the pH of the aqueous dispersion liquid of copper citrate was adjusted to 2 and a reducing agent of -0.4 V was added an under strongly acidic condition, the elution of copper ions from copper citrate was slow, the reduction of copper citrate was not completed, and thus the copper particles could not be produced.

In Comparative Example 2, since the pH of the aqueous dispersion liquid of copper citrate was adjusted to 8 and a reducing agent of -0.8 V was added an under an alkaline condition, grain growth occurred in the liquid, the average particle diameter of the primary particles was 285 nm, and moreover, the total concentration of metal impurities in the obtained copper particles was as high as 20 ppm by mass.

In Comparative Example 3, since the pH of the aqueous dispersion liquid of copper citrate was adjusted to 10 and a reducing agent of -1.0 V was added an under a strongly alkaline condition, grain growth occurred in the liquid, the average particle diameter of the primary particles was 320 nm, and moreover, the total concentration of metal impurities in the obtained copper particles was as high as 60 ppm by mass.

In Comparative Example 4, since ammonium formate of 0.3 V was used as a reducing agent, the reduction of copper citrate did not proceed, and thus the copper particles could not be produced.

In Comparative Example 5, since ammonium formate of -0.2 V was used as a reducing agent, the reduction of copper citrate did not proceed, and thus the copper particles could not be produced.

In Comparative Example 6, a hydrazine monohydrate of -0.6 V was used as a reducing agent for copper citrate. However, although the mixed liquid was heated at 70°C since the holding time was as short as 1.0 hours, the reduction of copper citrate was not completed, and thus the copper particles could not be produced.

In Comparative Example 7, a hydrazine monohydrate of -0.6 V was used as a reducing agent for copper citrate. However, although the mixed liquid was heated at 60°C since the holding time was too long as 3.0 hours, grain growth occurred in the liquid, and the average particle diameter of the primary particles was 251 nm although the total concentration of metal impurities in the obtained copper particles was less than 10 ppm by mass. In addition, in the time-of-flight secondary ion mass spectrometry, the amounts of detected CuC₂O₂H⁻ ions and C₂H₃O₂⁻ ions were less than 0.01 times the amount of detected Cu⁺ ions, and the coating amount of the organic protective film was small.

In Comparative Example 8, a hydrazine monohydrate of -0.6 V was used as a reducing agent for copper citrate. However, since the heating temperature of the mixed liquid was as high as 80°C although the holding time was as suitable as 1.5 hours, grain growth occurred in the liquid, the average particle diameter of the primary particles was 225 nm, and moreover, the total concentration of metal impurities in the obtained copper particles was as high as 20 ppm by mass. In addition, in the time-of-flight secondary ion mass spectrometry, the amounts of detected CuC₂O₂H⁻ ions and C₂H₃O₂⁻ ions were less than 0.01 times the amount of detected Cu⁺ ions, and the coating amount of the organic protective film was small.

In Comparative Example 9, a hydrazine monohydrate of -0.6 V was used as a reducing agent for copper citrate. However, since the heating temperature of the mixed liquid was as low as 55°C although the holding time was as suitable as 2.5 hours, the reduction of copper citrate was not completed, and thus the copper particles could not be produced.

In Comparative Example 10, a hydrazine monohydrate of -0.7 V was used as a reducing agent for copper citrate, and the mixed liquid was heated to 70°C and held for 2.0 hours. However, since the aqueous dispersion liquid of copper carboxylate was adjusted to a pH of 6, a difference between the oxidation reduction potential of copper ions and the oxidation reduction potential of the hydrazine compound became large, whereby the precipitation of metals, which were less noble than copper, was accelerated, and the total concentration of metal impurities in the obtained copper particles was as high as 20 ppm by mass.

In Comparative Example 11, although the mixed liquid was heated to 70°C and held for 2.0 hours since the pH of the aqueous dispersion liquid of copper phthalate was adjusted to 8 and a reducing agent of -0.9 V was used as a reducing agent, grain growth occurred in the liquid, the average particle diameter of the primary particles was 331 nm, and moreover, the total concentration of metal impurities in the obtained copper particles was as high as 30 ppm by mass.

In Comparative Example 12, although the mixed liquid was heated to 70°C and held for 2.0 hours since the pH of the aqueous dispersion liquid of copper phthalate was adjusted to 10 and a reducing agent of -1.0 V was used as a reducing agent, grain growth occurred in the liquid, the average particle diameter of the primary particles was 399 nm, and moreover, the total concentration of metal impurities in the obtained copper particles was as high as 50 ppm by mass.

In Comparative Example 13, although the mixed liquid was heated to 70°C and held for 2.0 hours since the pH of the aqueous dispersion liquid of copper tartrate was adjusted to 8 and a reducing agent of -0.9 V was used as a reducing agent, the total concentration of metal impurities in the obtained copper particles was as high as 30 ppm by mass.

In Comparative Example 14, although the mixed liquid was heated to 70°C and held for 2.0 hours since the pH of the aqueous dispersion liquid of copper tartrate was adjusted to 10 and a reducing agent of -1.0 V was used as a reducing agent, the total concentration of metal impurities in the obtained copper particles was as high as 50 ppm by mass.

In Comparative Example 15, although the mixed liquid was heated to 70°C and held for 2.0 hours since the pH of the aqueous dispersion liquid of copper benzoate was adjusted to 8 and a reducing agent of -0.9 V was used as a reducing agent, the total concentration of metal impurities in the obtained copper particles was as high as 30 ppm by mass.

In Comparative Example 16, although the mixed liquid was heated to 70°C and held for 2.0 hours since the pH of the aqueous dispersion liquid of copper benzoate was adjusted to 10 and a reducing agent of -1.0 V was used as a reducing agent, the total concentration of metal impurities in the obtained copper particles was as high as 40 ppm by mass.

In Comparative Example 17, hydrazine monohydrate was used as a reducing agent. Although the mixed liquid was heated to 70°C and held for 2.0 hours since the oxidation reduction potential of this reducing agent was -0.9 V and the copper ammine complex was used under an acidic condition of a pH value of 5, grain growth occurred in the liquid, the average particle diameter of the primary particles was 400 nm, and moreover, the total concentration of metal impurities in the obtained copper particles was as high as 50 ppm by mass. In addition, although the amount of detected CuC₂O₂H⁻ ions and the amount of detected C₂H₃O₂⁻ ions with respect to the amount of detected Cu⁺ ions were examined, neither of them was detected since a component derived from copper carboxylate was not contained.

In Comparative Example 18, hydrazine monohydrate was used as a reducing agent. Although the mixed liquid was heated to 70°C and held for 2.0 hours since the oxidation reduction potential of this reducing agent was -1.0 V and the copper ammine complex was used under an acidic condition of a pH value of 5, grain growth occurred in the liquid, the average particle diameter of the primary particles was 166 nm, and moreover, the total concentration of metal impurities in the obtained copper particles was as high as 90 ppm by mass. In addition, although the amount of detected CuC₂O₂H⁻ ions and the amount of detected C₂H₃O₂⁻ ions with respect to the amount of detected Cu⁺ ions were examined, neither of them was detected since a component derived from copper carboxylate was not contained.

In Comparative Examples 19 to 22, since methylcellulose, polyethylene glycol, polyvinyl alcohol, and gelatin were each added as a surface protective agent for the core particles, a hydrazine monohydrate of -0.6 V was used as a reducing agent, the pH value was adjusted to 5, and the mixed liquid was heated to 70°C and held for 1.5 hours. However, the total concentration of metal impurities in the obtained copper particles was as high as 20 ppm by mass to 80 ppm by mass. These are conceived to be due to the result of the influence of metal impurities contained in the surface protective agent.

In contrast, in Examples 1 to 26, since the reducing agent was added and mixed under an acidic condition of a pH of 3 or more and less than a pH of 6, a hydrazine compound was used as a reducing agent, the holding temperature of the synthesis liquid at the time of heating was set to 60°C or higher and 75°C or lower, and the holding time at the time of heating was set to 1.5 hours or more and 2.5 hours or less, the average particle diameter of the primary particles of the copper particles was in a range of 51 nm (Example 22) to 180 nm (Example 19), and all the total concentrations of metal impurities having an oxidation reduction potential lower than that of copper were less than 10 ppm by mass.

### INDUSTRIAL APPLICABILITY

The copper particles according to the present invention can be used as particles for a lead-free wiring line for a fine pitch or as particles for bonding, and a paste for a wiring line or a paste for bonding, which is obtained by using these particles for a wiring line or particles for bonding as a raw material, can be suitably used for mounting fine electronic components.

### REFERENCE SIGNS LIST

10: Copper particle
11: Core particle
12: Organic protective film

## Claims

1. Copper particles comprising core particles formed of metallic copper and organic protective films which are coated on surfaces of the core particles and are formed from an organic molecule derived from copper carboxylate,
wherein in the copper particles a total concentration of metal impurities having an oxidation reduction potential lower than that of copper is less than 10 ppm by mass,
an average particle diameter of the copper particles in a state where the copper particles are primary particles is in a range of more than 50 nm and 200 nm or less, and
in a case where the copper particles are analyzed using a time-of-flight secondary ion mass spectrometry (TOF-SIMS), an amount of detected CuC₂O₂H⁻ ions is in a range of 0.02 times or more with respect to an amount of detected Cu⁺ ions, and an amount of detected C₂H₃O₂⁻ ions is in a range of 0.02 times or more with respect to the amount of the detected Cu⁺ ions.

2. A method for producing copper particles according to Claim 1, without using a dispersing agent and a surface protective agent for suppressing aggregation between particles and/or oxidation of particles, the method for producing copper particles,
the method comprising the steps of:
adding a pH adjusting agent to an aqueous dispersion liquid of copper carboxylate to adjust pH of the aqueous dispersion liquid to be in an acidic range of 3 or more and less than 6;
adding an aqueous solution of a hydrazine compound having an oxidation reduction potential in a range of -0.7 V to -0.5 V to the pH-adjusted aqueous dispersion liquid of the copper carboxylate and carrying out mixing to obtain a mixed liquid; and
heating the mixed liquid to a temperature of 60°C to 75°C and holding for 1.5 hours to 2.5 hours in an inert gas atmosphere, to reduce the copper carboxylate to obtain a copper particle dispersion liquid in which the copper particles are dispersed.

3. The method for producing copper particles according to Claim 2,
wherein the copper carboxylate is poorly soluble in water and is one or two or more kinds of copper salts selected from the group consisting of copper carboxylates having 4 to 8 carbon atoms.

4. The method for producing copper particles according to Claim 2,
wherein the pH adjusting agent is ammonium carboxylate.
